# EUROPÄISCHE PATENTSCHRIFT

(11) **EP 2 597 815 B1**
(45) Veröffentlichungstag und Bekanntmachung des Hinweises auf die Patenterteilung: **24.07.2019**
(21) Anmeldenummer: 11190245.8
(22) Anmeldetag: 23.11.2011
(51) Int. Cl.: H04L 12/24, H04L 29/12, H04L 29/08

(54) **VERFAHREN ZUR IDENTIFIKATION VON IN EINEM KOMMUNIKATIONSNETZWERK ZUSAMMENGEFASSTEN GERÄTEN**
Method for identification of devices included in a communication network
Procédé d'identification d'appareils rassemblés dans un réseau de communication

(43) Veröffentlichungstag der Anmeldung: 29.05.2013
(73) Patentinhaber: Siemens Schweiz AG, 8047 Zürich (CH)
(72) Erfinder: Meier, André, 6343 Risch (CH)
(74) Vertreter: Maier, Daniel Oliver

(56) Entgegenhaltungen:
- Anonymous: "Best Practices - From BACnet Developer's Wiki", , 19. Dezember 2010 (2010-12-19), Seiten 1-2, XP55027855, Gefunden im Internet: URL:http://www.bacnetwiki.com/wiki/index.p hp?title=Best_Practices&printable=yes [gefunden am 2012-05-22]
- David G. Holmberg: "BACnet Wide Area Network Security Threat Assessment", , 1. Juli 2003 (2003-07-01), Seiten 1-23, XP55027857, DOI: 10.1.1.133.2744 Gefunden im Internet: URL:http://citeseerx.ist.psu.edu/viewdoc/d ownload?doi=10.1.1.133.2744&rep=rep1&type= pdf [gefunden am 2012-05-22]
- Anonymous: "BACnet TESTING LABORATORIES IMPLEMENTATION GUIDELINES", , 22. Juni 2009 (2009-06-22), Seiten 1-32, XP55027860, Gefunden im Internet: URL:http://www.big-eu.org/service/literatu r BTL Implementation Guidelines-v26.pdf [gefunden am 2012-05-22]

## Beschreibung

Die Erfindung betrifft ein Verfahren zur Identifikation von in einem Kommunikationsnetzwerk zusammengefassten Geräten durch ein übergeordnetes Gerät. Kommunikationsnetze haben jeweils unterschiedliche Bandbreiten und wenn ein Kommunikationsnetzwerk noch untergeordnete Kommunikationsnetze, sogenannte Subnetze, umfasst, kann für jedes untergeordnete Kommunikationsnetzwerk eine eigene Bandbreitenbeschränkung gelten.

In einem Kommunikationsnetzwerk zusammengefasste Geräte, also zum Beispiel Sensoren und Aktoren für die Gebäudeautomatisierung, können in Gruppen oder auch netzwerkübergreifend angesprochen werden, damit diese auf eine Identifikationsanfrage mit einer Identifikationskennung antworten. Beim in der Gebäudeautomatisierung weit verbreiteten BACnet ist als Identifikationsanfrage zum Beispiel ein als "Who-Is" bekanntes Telegramm vorgesehen. Jedes Gerät in dem Kommunikationsnetzwerk antwortet auf eine solche Who-Is-Anfrage/Identifikationsanfrage mit einem "I-Am" Telegramm, also einer Identifikationskennung, die zumindest die Adresse des jeweiligen Geräts umfasst.

Eine "Who-Is" Anfrage eignet sich auch zum Versenden per broadcast, um damit eine Gruppe von Geräten zu erreichen. Bei einem unbekannten oder zumindest teilweise unbekannten Kommunikationsnetzwerk, und um ein solches handelt es sich, wenn das hier vorgeschlagene Verfahren zur Identifikation von in dem Kommunikationsnetzwerk zusammengefassten Geräten zum Einsatz kommen soll, ist jedoch nicht vorhersehbar, wie viele Geräte mit einer solchen "Who-Is" Anfrage erreicht werden. Bereits eine Anzahl daraufhin zurückgelieferter Identifikationskennungen kann an der begrenzten Bandbreite des Kommunikationsnetzwerks scheitern. Bei einem auch Subnetze umfassenden Kommunikationsnetzwerk kommt erschwerend noch hinzu, dass an Netzwerkgrenzen vorgesehene Router oder dergleichen auch nur eine bestimmte Menge von aus dem jeweiligen Subnetz stammenden Identifikationskennungen weiterleiten können und dass es, wenn insofern ein Schwellwert überschritten ist, unweigerlich zu Paketverlusten und damit zu Verlusten bei den weiter zu leitenden Identifikationskennungen kommt.

Eine "Who-Is" oder sonstige Identifikationsanfrage liefert demnach zwar Informationen zu einzelnen, vom Kommunikationsnetzwerk umfassten Geräten aber nicht notwendig zu allen umfassten Geräten und es besteht bei einer Identifikation einzelner Geräte keinerlei Sicherheit ob noch weitere, nicht identifizierte Geräte von dem Kommunikationsnetzwerk umfasst sind.

Zur vom BACnet bekannten "Who-Is"-Abfrage wird auf folgende im Internet zugänglichen Dokumente verwiesen:
Anonymous: "Best Practices - From BACnet Developer's Wiki" (2010-12-19), XP55027855; David G. Holmberg: "BACnet Wide Area Network Security Threat Assessment" (2003-07-01), XP55027857; Anonymous: "BACnet Testing Laboratories Implementation Guidelines" (2009-06-22), XP55027860.

Grundsätzlich könnte das Kommunikationsnetzwerk in Abschnitten durchsucht werden, indem jeweils nur für einen bestimmten Bereich des Adressraums eine Identifikationsanfrage versandt und die zugehörigen Identifikationskennungen gesammelt werden sowie anschließend zu einem nächst folgenden Bereich des Adressraums umgeschaltet wird. Dies ist jedoch zeitaufwändig, weil dann zum Beispiel auch Bereiche des Adressraums, in denen sich keine oder nur wenige Geräte befinden, mit dem gleichen Aufwand durchsucht werden, wie Bereiche mit einer Vielzahl von Geräten. Für einen solchen iterativen und statischen Ansatz würde die Größe eines in jeweils einem Iterationsschritt durchsuchbaren Bereichs des Adressraums notwendig durch die Bandbreite und eine Annahme der ungünstigsten Situation, nämlich dass unter jeder von dem Bereich des Adressraums umfassten Adresse ein Gerät antwortet, begrenzt.

Eine Aufgabe der Erfindung besteht daher darin, ein Verfahren zur Identifikation von in einem Kommunikationsnetzwerk zusammengefassten Geräten anzugeben, das mit einer ausreichenden Sicherheit jedes von dem Kommunikationsnetzwerk umfasste Gerät identifiziert und dabei normalerweise schneller als die oben skizzierte iterative Suche in jeweils sukzessive aufeinander folgenden Bereichen des Adressraums ist.

Diese Aufgabe wird erfindungsgemäß mit den Merkmalen des Anspruchs 1 gelöst.

Der Vorteil der Erfindung besteht darin, dass überwacht wird, ob eine hinreichende Wahrscheinlichkeit oder Gefahr dafür besteht, dass während eines Zeitabschnitts mehr Identifikationskennungen versandt wurden, als verlässlich verarbeitet werden können und dass Adressen identifizierter Geräte für die Festlegung der Grenzen reduzierter Anfragebereiche verwendet werden. Die Bewertung, ob eventuell mehr Identifikationskennungen versandt wurden, als verlässlich verarbeitet werden können, wird durchgeführt, indem eine Anzahl tatsächlich empfangener Identifikationskennungen mit einem Schwellwert verglichen wird. Solange dieser Schwellwert unterschritten ist, kann davon ausgegangen werden, dass alle versandten Identifikationskennungen auch tatsächlich empfangen wurden. Der Schwellwert ist für einen Algorithmus, mit dem das Verfahren implementiert wird, vorgegeben oder vorgebbar und speziell von der Bandbreite des Kommunikationsnetzwerks, der minimalen Bandbreite etwaiger Subnetze, der Geschwindigkeit, mit der an Netzgrenzen befindliche Router oder dergleichen Datentelegramme weiterleiten können, usw. abhängig. Wenn der Schwellwert überschritten wird, ist nur klar, dass eine besonders große Anzahl von Identifikationskennungen empfangen wurde, nicht jedoch ob die Anzahl der empfangenen Identifikationskennungen auch der Anzahl der tatsächlich versandten Identifikationskennungen entspricht. Dann wird der Anfragebereich reduziert um die Anzahl der während eines Zeitabschnitts eingehenden Identifikationskennungen zu reduzieren. Dann wird das Aussenden der Identifikationsanfrage und das Sammeln empfangener Identifikationskennungen mit dem reduzierten Anfragebereich wiederholt. Wird dann der Schwellwert unterschritten, ist der Anfragebereich vollständig analysiert. Wird der Schwellwert immer noch überschritten, wird der Anfragebereich weiter reduziert. Die Besonderheit besteht dabei darin, dass Adressen identifizierter Geräte für die Festlegung der Grenzen reduzierter Anfragebereiche verwendet werden. Der Umfang des Anfragebereichs ist damit dynamisch und es erfolgt kein kachelförmiges, sukzessives Abscannen des Adressraums des Kommunikationsnetzwerks.

Wenn die Adresse eines identifizierten Geräts eine Obergrenze des reduzierten Anfragebereichs festlegt, kann als Untergrenze des reduzierten Anfragebereichs die Untergrenze des vorherigen Anfragebereichs weiter verwendet werden. Auch wenn sich für einen Anfragebereich eine unterhalb des Schwellwerts verbleibende Anzahl von eingegangenen Identifikationskennungen ergibt und demnach zu einem nächstfolgenden Anfragebereich umgeschaltet werden kann, wird dessen Obergrenze durch die Adresse eines identifizierten Geräts festgelegt, so dass sich auch hier dynamische Anfragebereiche ergeben.

Zur automatischen Ermittlung eines variablen Anfragebereichs ist erfindungsgemäß vorgesehen, dass ein Zugriff auf eine nach Adressen geordnete Liste mit Adressen bereits identifizierter Geräte mit einer jeweils ein Element der Liste referenzierenden Zugriffsposition erfolgt. Die Zugriffsposition wird hochgesetzt, wenn in einem Anfragebereich nur eine unterhalb des Schwellwerts verbleibende Anzahl von Identifikationskennungen empfangen wurde und dieser damit vollständig analysiert ist, so dass auf den nächsten Anfragebereich umgeschaltet werden kann. Eine Möglichkeit zum Hochsetzen der Zugriffsposition besteht darin, die alte Zugriffsposition um genau die Anzahl der empfangenen Identifikationskennungen zu erhöhen. Wenn ein Anfragebereich nicht vollständig analysiert werden konnte und dieser darum reduziert werden muss, bleibt die Zugriffsposition unverändert, aber auch mit einer unveränderten Zugriffsposition ergibt sich ein niedrigerer oberer Grenzwert für den reduzierten Anfragebereich, weil die Liste trotz der nicht vollständigen Analyse des Anfragebereichs weitere Listenelemente erhalten hat und so bei einer nach Adressen sortierten Liste an der Zugriffsposition eine niedrigere Adresse erscheint.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform des Verfahrens ist vorgesehen, dass dieses mit einem den vollständigen Adressraum umfassenden Anfragebereich beginnt. Auf diese Weise ist sichergestellt, dass auch wenn bei einem so umfangreichen Anfragebereich eher nicht erwartet werden kann, dass die Anzahl der eingehenden Identifikationskennungen unter dem Schwellwert verbleibt, eine gleichverteilte Auffüllung zum Beispiel einer Liste mit bekannten Geräten und deren Adressen erfolgt, so dass beim späteren Verwenden von Adressen bereits identifizierter Geräte auf eine gleichverteilte Datenbasis zurückgegriffen werden kann.

Bei einer weiteren Ausführungsform des Verfahrens ist vorgesehen, dass bei Beginn des Verfahrens von einer Anzahl bereits identifizierter Geräte und bei späteren Durchläufen des Verfahrens von einer Anzahl bereits identifizierter Geräte im jeweiligen Anfragebereich ausgegangen wird und dass deren Anzahl als numerischer Wert in einen Algorithmus zur Implementation des Verfahrens einfließt. Eine Anzahl bereits identifizierter Geräte hat den Vorteil einer nicht leeren Liste mit Geräteadressen, so dass von Anfang an mit einer solchen Liste gearbeitet werden kann. Zudem hat eine Anzahl bereits identifizierter Geräte den Vorteil, dass deren Adressen im Adressraum des Kommunikationsnetzwerks normalerweise zufällig verteilt sind, so dass sich von Anfang an eine ausreichende Dynamik hinsichtlich der automatischen Ermittlung der variablen Anfragebereiche ergibt.

Der vorgegebene Schwellwert kann aufgrund der Kapazitäten des Netzwerks und etwaiger Router Kapazitäten sowie weiteren Parametern berechnet werden. In Versuchen hat sich ergeben, dass sich die Laufzeit des Verfahrens normalerweise günstig beeinflussen lässt, wenn eine Anzahl der in einem aktuellen Anfragebereich identifizierten Geräte in der Größenordnung von zwei Dritteln des Schwellwerts liegt.

Die oben genannte Aufgabe wird auch mit einem Gerät zur kommunikativen Verbindung mit anderen Geräten in einem Kommunikationsnetzwerk gelöst, das zumindest zeitweise als übergeordnetes Gerät fungiert und nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Aktor, ein Sensor oder eine Leitstation zu Gebäudeautomatisierung, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen.

Es zeigen
- FIG 1: eine Anzahl von in einem Netzwerk zusammengefassten Geräten,
- FIG 2: einen Adressraum mit darin automatisch gebildeten Anfragebereichen,
- FIG 3: im linken Bereich eine Darstellung einer Liste mit Adressen identifizierter Geräte und im rechten Bereich die Liste mit während des Verfahrens neu hinzukommenden Adressen,
- FIG 4: eine schematisch vereinfachte Darstellung eines Flussdiagramms des Verfahrens und
- FIG 5: eine schematisch vereinfachte Darstellung eines in dem Kommunikationsnetzwerk als übergeordnetes Gerät fungierenden Geräts.

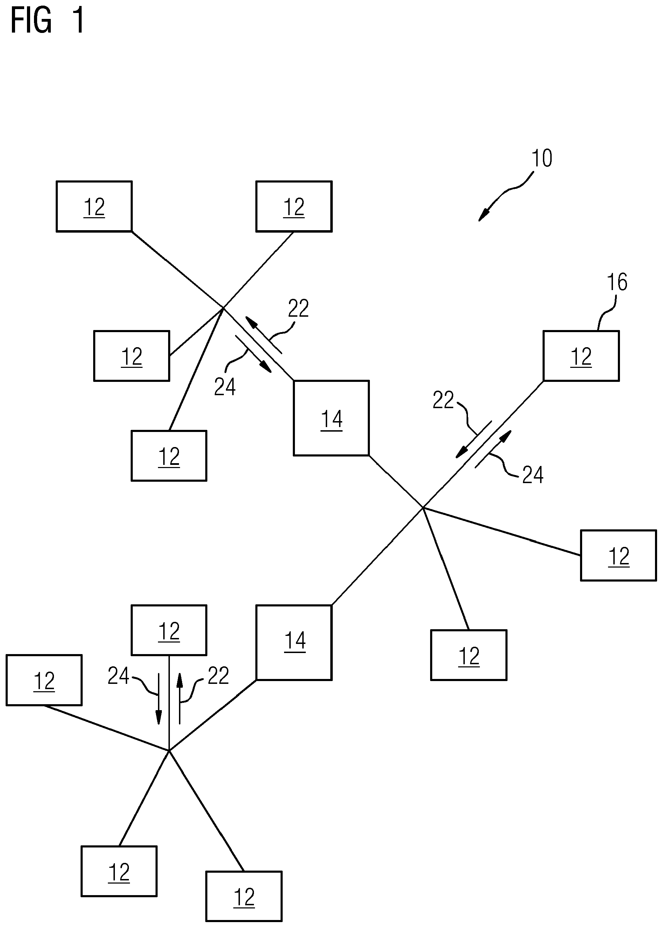

FIG 1 zeigt schematisch vereinfacht eine Anzahl von in einem im Folgenden mitunter auch nur kurz als Netzwerk bezeichneten Kommunikationsnetzwerk 10 zusammengefassten und untereinander kommunikativ verbundenen Geräten 10, wobei es sich bei den Geräten 10 zum Beispiel um Aktoren und/oder Sensoren für die Gebäudeautomatisierung handelt. Die dargestellte Topologie des Netzwerks 10 ist lediglich exemplarisch ausgewählt und für die weitere Beschreibung ohne Belang. Hinzuweisen ist lediglich darauf, dass das Netzwerk 10 einzelne Teilnetze (Subnetze) umfassen kann und dass am Übergang zu einem solchen Teilnetz normalerweise ein Router 14 vorgesehen ist.

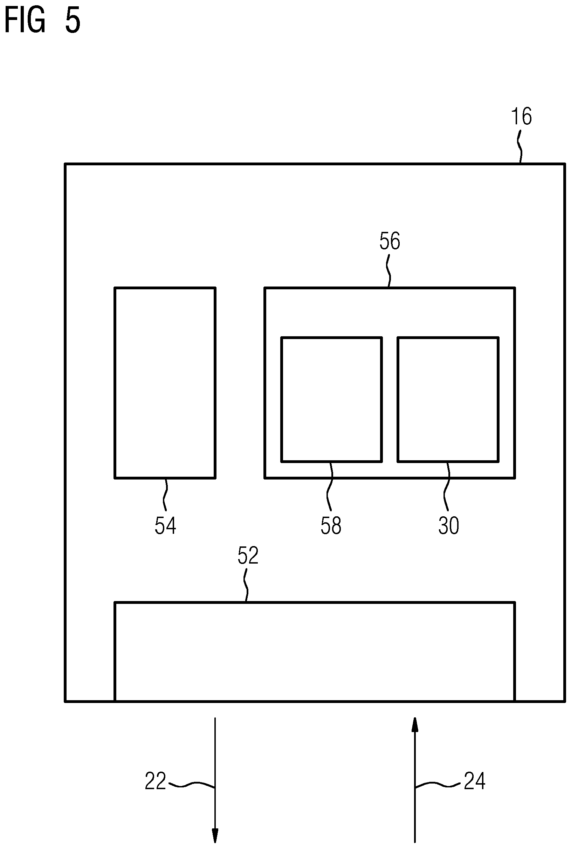

Für das zu beschreibende Verfahren fungiert eines der Geräte 12 als übergeordnetes Gerät 16 (FIG 5) . Als übergeordnetes Gerät 16 kommt grundsätzlich jedes Gerät 12, spezielle aber ein Gerät 12 in Betracht, das zum Beispiel als Leitstation fungiert, also ein Gerät 12, das über ausreichende Speicher- und Verarbeitungsfunktionalität für die Ausführung des Verfahrens verfügt.

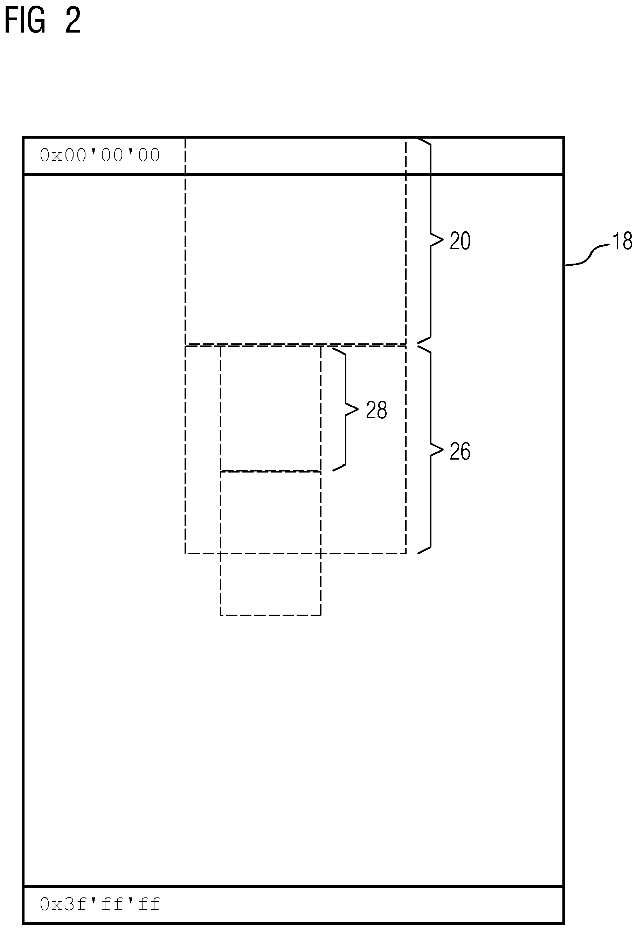

Jedes der Geräte 12, 16 ist im Netzwerk 10 über eine dem Gerät exklusiv zugeteilte, zum Beispiel eingestellte oder automatisch zugewiesene Adresse erreichbar. Dafür ist ein Adressraum 18 (FIG 2) vorgegeben und eine gültige Adresse muss zum Adressraum gehören. Der Adressraum ist durch einen unteren und einen oberen Grenzwert festgelegt und die kleinste im Netzwerk 10 verwendbare Adresse entspricht dem unteren Grenzwert und die größte im Netzwerk 10 verwendbare Adresse entspricht dem oberen Grenzwert.

FIG 2 zeigt eine schematisch vereinfachte Darstellung des Adressraums 18. Die kleinste und die größte verwendbare Adresse sind dabei mit dem hexadezimalen Wert 0x00' 00' 00 (also Null) bzw. 0x3f' ff' ff angegeben. Diese beiden Adressen können - müssen aber nicht - von jeweils einem Gerät 12 im Netzwerk 12 (FIG 1) verwendet werden. Jedenfalls liegt jede Adresse eines vom Netzwerk 10 umfassten Geräts 12 im Adressraum 18.

Bei dem Verfahren ist vorgesehen, dass das übergeordnete Gerät 16 den Adressraum 18 in Anfragebereiche 20 unterteilt. Das Verfahren beginnt dabei mit genau einem Anfragebereich 20 und im weiteren Verlauf können sich neue Anfragebereiche 20 ergeben, die an die Stelle vorhergehender Anfragebereiche 20 treten. Der Anfragebereich 20 als zusammenhängender Ausschnitt aus dem Adressraum 18 wird als Anfragebereich 20 bezeichnet, weil das übergeordnete Gerät 16 zur Identifikation von in dem Netzwerk 10 zusammengefassten Geräten 12 entweder an alle Adressen im Anfragebereich 20 eine Identifikationsanfrage 22 (FIG 1) sendet oder an alle Adressen im Adressraum 18 eine solche Identifikationsanfrage 22 sendet und nur die Geräte 12 im Anfragebereich 20 auf diese reagieren. Zur vereinfachten sprachlichen Darstellung werden beide Szenarien, nämlich dass entweder an alle Adressen im Anfragebereich 20 gesendet wird oder dass an alle Adressen im gesamten Adressraum 18 gesendet wird und nur die Geräte 12 im Anfragebereich 20 antworten, als ein Senden an alle Adressen im Anfragebereich 20 bezeichnet, denn das mit dem jeweiligen Senden der Identifikationsanfrage 22 angestrebte Ergebnis, dass Geräte 12 im Anfragebereich 20 mit einer Identifikationskennung 24 antworten, ist in beiden Fällen gleich. Bei einer an alle Adressen im gesamten Adressraum 18 als broadcast gesendeten Identifikationsanfrage umfasst das zugrunde liegende Datentelegramm eine Spezifikation des jeweiligen Anfragebereichs 20, so dass nur die zum Anfragebereich 20 gehörenden Geräte 12 auf den broadcast reagieren.

Die Identifikationsanfrage 22 ist in FIG 1 durch einen Pfeil dargestellt. Tatsächlich handelt es sich um ein im Netzwerk 10 nach einem für das Netzwerk 10 oder davon umfasste Unternetze festgelegten Protokoll versandtes Telegramm, bei einer Verwendung des BACnet-Protokolls (BACnet = Building Automation and Control Networks) zum Beispiel um ein sogenanntes "Who-Is"-Telegramm 22. Um die Übersicht über die Darstellung in FIG 1 nicht unnötig zu erschweren, ist der Versand der Identifikationsanfrage 22 nur an einzelnen Stellen gezeigt. Geräte 12, welche die Identifikationsanfrage 22 erhalten, antworten mit einer Identifikationskennung 24 (FIG 1) und auch eine solche Identifikationskennung 24 ist nur an einzelnen Stellen gezeigt. Die Identifikationskennungen 24 werden jedenfalls vom zentralen Gerät 16 gesammelt und ausgewertet. Weil sich ergeben kann, dass nicht alle von den vom Netzwerk 10 umfassten Geräten 12 versandten Identifikationskennungen 24 beim zentralen Gerät 16 eintreffen, vergleicht das zentrale Gerät eine Anzahl der erhaltenen Identifikationskennungen 24 mit einem vorgegebenen Schwellwert. Gründe dafür, dass einzelne Identifikationskennungen 24 nicht beim zentralen Gerät 16 eintreffen, können zum Beispiel darin liegen, dass zu viele Identifikationskennungen 24 über einen Router 14 geleitet werden müssen und dass dabei einzelne Telegramme mit enthaltenen Identifikationskennungen 24 verloren gehen (Paketverlust). Wenn der für die Anzahl der Identifikationskennungen 24 vorgegebene Schwellwert überschritten wird, ist zwar sichergestellt, dass eine im Vergleich zum Schwellwert größere Anzahl von Identifikationskennungen 24 empfangen wurde, es ist jedoch nicht klar, ob noch weitere Identifikationskennungen 24 versandt wurden und insofern einzelne Identifikationskennungen 24 nicht beim übergeordneten Gerät 16 eingegangen sind.

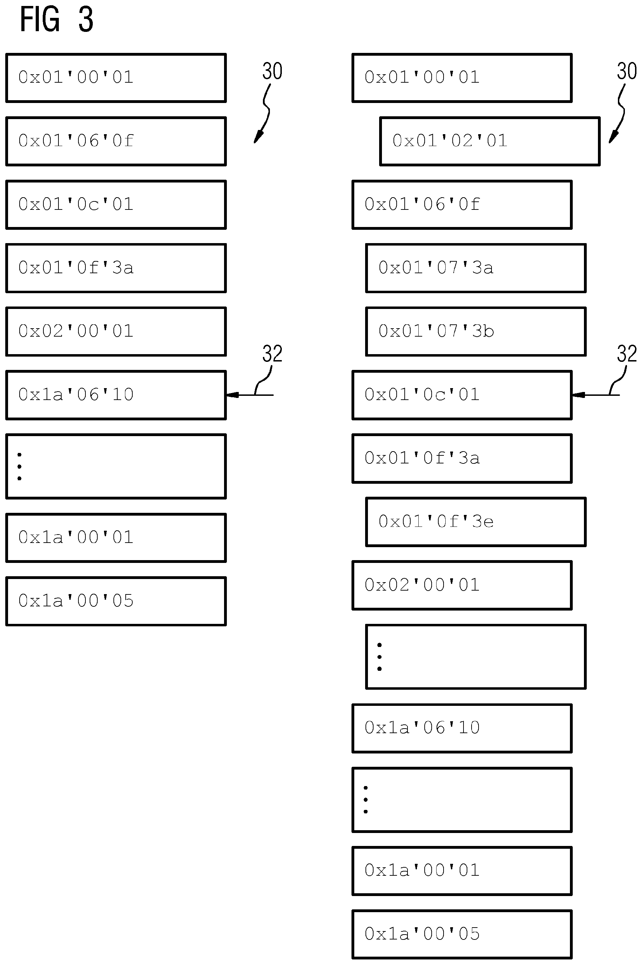

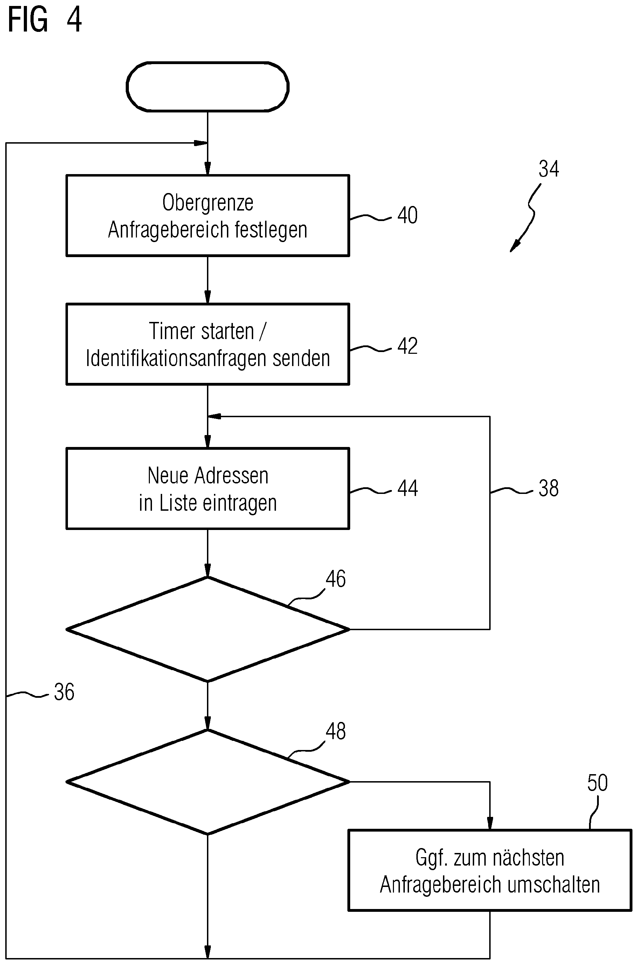

Wenn die Anzahl der erhaltenen Identifikationskennungen 24 unterhalb des Schwellwerts liegt, wird das Verfahren mit einem an den Anfragebereich 20 angrenzenden neuen Anfragebereich 26 (FIG 2) fortgesetzt und es werden erneut Identifikationsanfragen 22 gesendet und resultierende Identifikationskennungen 24 gesammelt. Für die weitere Beschreibung soll angenommen werden, dass jetzt die Anzahl der erhaltenen Identifikationskennungen 24 oberhalb des Schwellwerts liegt. Dann wird das Verfahren mit einem reduzierten Anfragebereich 28, der eine Teilmenge des vorherigen Anfragebereichs 26 ist, fortgesetzt. Der reduzierte Anfragebereich 26 ist dabei durch die Adresse eines identifizierten Geräts 12 begrenzt. Bei dem identifizierten Gerät 12 kann es sich um ein Gerät 12 handeln, das in dem Durchlauf des Verfahrens ermittelt wurde, bei dem die Anzahl eingegangener Identifikationskennungen 24 den Schwellwert überschritten hat oder auch um ein bereits vorher identifiziertes Gerät 12. Zur Erläuterung dieses Aspekts wird auf die Darstellungen in FIG 3 und FIG 4 verwiesen.

FIG 3 zeigt schematisch vereinfacht eine als Feld oder als Liste 30 in einem Computerprogramm implementierte Datenstruktur, in der zumindest die Adressen identifizierter Geräte 12 gespeichert werden. Die dargestellten Adressen sind willkürlich gewählt und auch nicht alle Adressen sind vollständig symbolisch angegeben. Erkennbar ist allerdings, dass jede identifizierte Adresse in der Liste 30 eine eindeutige Position hat. Die Position einer Adresse in der Liste 30 kann sich ändern, wenn beim Ergänzen der Liste 30 im Zusammenhang mit der Identifikation neuer Geräte 12 niedrigere Adressen in die Liste 30 eingetragen werden.

Die Verwendung von Daten aus der Liste 30 erfolgt an einer Zugriffsposition 32. Die Zugriffsposition 32 ist in der Darstellung in FIG 3 symbolisch als Pfeil dargestellt, denn die Zugriffsposition 32 referenziert jeweils genau ein Element der Liste 30, genauso, wie ein Pfeil ein solches Element bezeichnet. Bei einer Implementation des Verfahrens als Computerprogramm ist die Zugriffsposition ein numerischer Wert oder ein sogenannter Zeiger.

Die Zugriffsposition 32 wird verwendet, um die Obergrenze eines Anfragebereichs 20, 26, 28 festzulegen, indem die in dem durch die Zugriffsposition 32 bezeichneten Element der Liste 30 gespeicherte Geräteadresse verwendet wird. Zur Erläuterung dieses Aspekts ist eine parallele Betrachtung der Darstellungen in FIG 3 und FIG 4 notwendig.

FIG 4 zeigt schematisch vereinfacht ein Flussdiagramm 34 einer Ausführungsform des hier beschriebenen Verfahrens. Das Flussdiagramm 34 und entsprechend eine Implementierung mit Computerprogrammanweisungen umfasst eine äußere Schleife 36 und eine innere Schleife 38. Die äußere Schleife 36 wird solange ausgeführt bis der komplette Adressraum 18 abgearbeitet ist. Zum Beginn der äußeren Schleife 36 wird eine Obergrenze des jeweiligen Anfragebereichs 20, 26, 28 festgelegt (erster Block 40) . Beim erstmaligen Durchlauf der äußeren Schleife 36 wird dabei als Untergrenze des Anfragebereichs 20 der untere Grenzwert des Adressraums 18 verwendet. Die Obergrenze des Anfragebereichs 20, 26, 28 ergibt sich jeweils als die Adresse eines bereits bekannten Geräts 12 und zum Ende des Verfahrens als oberer Grenzwert des Adressraums 18.

Wenn sich die Obergrenze des Anfragebereichs 20, 26, 28 als die Adresse eines bereits bekannten Geräts 12 ergibt, wird dafür auf die Liste 30 mit bereits bekannten Geräten 12 zugegriffen. Der Zugriff erfolgt mit der jeweiligen Zugriffsposition 32. Der Anfragebereich 20, 26, 28 umfasst damit alle Adressen zwischen dessen Unter- und Obergrenze und damit eine variable, automatisch ermittelte Anzahl von Adressen.

Beim ersten Durchlauf der äußeren Schleife 36 werden die Zugriffsposition 32 und ein Index auf Null gesetzt und der Zugriff auf die Liste 30 erfolgt mit einer Anzahl der bereits bekannten Geräte 12. Als Zugriffsposition 32 wird tatsächlich immer eine Summe aus dem aktuellen Stand des Index und einer Konstanten, nämlich der Anzahl der bereits bekannten Geräte 12, verwendet. Diese Summenbildung bewirkt, dass sich in jedem Anfragebereich 20, 26, 28 normalerweise genau eine der Anzahl der ursprünglich bekannten Geräte 12 entsprechende Geräteanzahl befindet und zwar auch dann, wenn bei wiederholten Durchläufen des Verfahrens weitere Geräte 12 identifiziert werden und damit die Anzahl der insgesamt identifizierten Geräte 12 steigt. Die Beschränkung des Anfragebereichs hat auch den Effekt, dass die Relation zwischen dem Schwellwert und einer Anzahl im Anfragebereich identifizierter Geräte unverändert bleibt. Über die Zugriffsposition 32 wird ein Element aus der Liste 30 ausgewählt. Die dort gespeicherte Adresse wird als Obergrenze für den Anfragebereich 20 verwendet.

Sodann wird ein Timer gestartet, eine Variable zur Protokollierung der eingegangenen Identifikationskennungen 24 initialisiert, also auf Null gesetzt, und es werden für den Anfragebereich 20 die Identifikationsanfragen 22 versendet (zweiter Block 42). Mit der inneren Schleife 38 wird der Ablauf des Timers überwacht. Der Timer, also eine diesbezügliche Softwarefunktionalität, wird mit einem vorgegebenen oder vorgebbaren Startwert initialisiert, der die Dauer, während derer die innere Schleife 38 ausgeführt wird, kodiert. Innerhalb der inneren Schleife 38 werden die eingehenden Identifikationskennungen 24 gesammelt und die davon umfassten Adressen des die jeweilige Identifikationskennung 24 sendenden Geräts 12, sofern diese noch nicht von der Liste 30 umfasst sind, in die Liste 30 aufgenommen (dritter Block 44). Zusätzlich wird im dritten Block 44 mit jeder im Anfragebereich 20 eingegangenen Identifikationskennung 24 eine Variable für die Anzahl der eingegangenen Identifikationskennungen 24 ("NumAnswers") inkrementiert. Solange der Timer nicht abgelaufen ist, wird mit einer ersten Abfrage 46 wieder zum Beginn der inneren Schleife 38 verzweigt.

Nach dem Ende der inneren Schleife 38, also wieder innerhalb der äußeren Schleife 36, wird überprüft, ob die Anzahl der eingegangenen Identifikationskennungen 24, also der Wert der diesbezüglichen Variable ("NumAnswers"), unterhalb des Schwellwerts für eine Anzahl verlässlich verarbeitbarer Identifikationskennungen 24 liegt. Der Schwellwert ist im Verfahren als Konstante oder als Variable realisiert und wird wie eingangs erläutert mit einem von einer Bandbreites des Netzwerks 10 und evtl. umfasster Subnetze, der Leistungsfähigkeit etwaiger Router 14, usw. abhängigen, vorgegebenen oder vorgebbaren Wert initialisiert. Die Überprüfung auf eine Unterschreitung des Schwellwerts wird mit einer zweiten Abfrage 48 realisiert. Wenn der Schwellwert unterschritten ist, wird das Verfahren mit einem an den Anfragebereich 20 angrenzenden neuen Anfragebereich 26 fortgesetzt, es wird also zu einem nächsten Anfragebereich umgeschaltet (vierter Block 50). Dafür kann die bisherige obere Grenze des Anfragebereichs 20 als untere Grenze des neuen Anfragebereichs verwendet werden; normalerweise wird man vorsehen, dass die der bisherigen oberen Grenze unmittelbar nachfolgende Adresse die untere Grenze des neuen Anfragebereichs bildet. Um die obere Grenze des neuen Anfragebereichs 26 festzulegen, wird noch im vierten Block 50 der Index um die Anzahl eingegangener Identifikationskennungen 24 ("NumAnswers") inkrementiert. Die obere Grenze des neuen Anfragebereichs 26 ergibt sich dann beim erneuten Ausführen der äußeren Schleife 36 (erster Block 40) mit einem Zugriff auf die Liste 30 an der durch die Summe aus Index und der Anzahl ursprünglich bekannter Geräte 12 festgelegten Zugriffsposition 32 oder, wenn die Liste 30 dafür nicht genügend Elemente umfasst, mit der Obergrenze des Adressraums 18.

Wenn bei der zweiten Abfrage 48 festgestellt worden ist, dass die Anzahl eingegangener Identifikationskennungen 24 den Schwellwert erreicht oder überschreitet, also nicht mit Sicherheit davon ausgegangen werden kann, dass alle versandten Identifikationskennungen 24 auch vom zentralen Gerät 16 empfangen wurden, wird nicht zum vierten Block 50 verzweigt und unmittelbar die äußere Schleife 36 mit einem reduzierten Anfragebereich 28 wiederholt. Als Untergrenze des reduzierten Anfragebereichs 28 wird die Untergrenze des Anfragebereichs aus dem vorangehenden Durchlauf der äußeren Schleife 36 verwendet. Die Obergrenze des reduzierten Anfragebereichs 28 ergibt sich erneut mit dem Zugriff auf die Liste 30 an der Zugriffsposition 32. Der numerische Wert der Zugriffsposition 32 hat sich nicht geändert, wenn mehr Identifikationskennungen 24 eingegangen sind, als verlässlich verarbeitet werden können. Allerdings hat sich der Inhalt der Liste 30 geändert, so dass die Zugriffsposition 32 möglicherweise immer noch zum Beispiel das zweihundertste Element der Liste 30 bezeichnet, aber die im zweihundertsten Element der Liste 30 gespeicherte Geräteadresse anders und im Besonderen kleiner als die Obergrenze des vorangehenden Anfragebereichs 26 ist. FIG 3 versucht dies graphisch zu veranschaulichen. Auf der linken Seite der Darstellung in FIG 3 ist ein Zustand der Liste 30 nach einem Durchlauf der äußeren Schleife 36 (FIG 4) dargestellt. Während des nächsten Durchlaufs der äußeren Schleife 36 werden weitere Geräte 12 identifiziert und entsprechend kommen neue Einträge zu der Liste 30 hinzu (dargestellt durch die leicht versetzt angeordneten Listenelemente auf der rechten Seite der Darstellung). Eine Listenposition 32, die zuvor zum Beispiel ein sechstes Element der Liste 30 referenziert hat, referenziert auch nach der Ergänzung der Liste 30 noch dessen sechstes Element. Die im referenzierten Element gespeicherte Adresse ist jetzt jedoch eine andere. Im darstellten Beispiel "0x01'0c.01" anstelle von zuvor "0x1a'06'10". Auf diese Weise wird der Umfang des Anfragebereichs 26 reduziert. Für den reduzierten Anfragebereich 26 besteht die Erwartung, dass die Anzahl der eintreffenden Identifikationskennungen 24 zumindest geringer als beim vorangehenden Durchlauf der äußeren Schleife 36 ist. Wenn die Anzahl der tatsächlich erhaltenen Identifikationskennungen 24 unterhalb des Schwellwerts verbleibt, kann am Ende der äußeren Schleife 36 ein neuer Anfragebereich ausgewählt werden (vierter Block 50; FIG 4). Wenn der Schwellwert auch für den reduzierten Anfragebereich 26 noch überschritten wird, erfolgt keine solche Umschaltung zu einem neuen Anfragebereich und die äußere Schleife 36 wird mit der gleichen Zugriffsposition 32 auf die Liste 30 erneut durchlaufen. Weil sich beim vorherigen Durchlauf der äußeren Schleife 36 wieder neue Listenelemente ergeben haben, ergibt sich auch bei unveränderter Zugriffsposition 32 wieder eine verringerte Obergrenze für den Anfragebereich und dieser ist damit erneut reduziert. Die Verkleinerung des Anfragebereichs erfolgt damit so lange, bis innerhalb der für den Timer vorgegeben Zeitspanne für den jeweiligen Anfragebereich eine unterhalb des Schwellwerts liegende Anzahl von Identifikationskennungen 24 eingegangen ist. Diese Verkleinerung des Anfragebereichs bedeutet einerseits, dass der Anfragebereich eine variable, aber automatisch ermittelte Anzahl von Adressen umfasst, denn die Obergrenze des Anfragebereichs ergibt sich anhand der Liste 30 und Unter- und Obergrenze des Anfragebereichs legen damit eine Anzahl vom Anfragebereich umfasster Adressen fest, die damit insgesamt automatisch ermittelt wird. Die Verkleinerung des Anfragebereichs bedeutet andererseits aber auch, dass der reduzierte Anfragebereich eine Teilmenge des vorangehenden Anfragebereichs ist, denn es bleibt zum Beispiel bei einer gleichen Untergrenze.

FIG 5 zeigt abschließend eine schematisch vereinfachte Darstellung eines übergeordneten Geräts 16, das zur Ausführung des hier beschriebenen Verfahrens vorgesehen ist. Das übergeordnete Gerät 16 umfasst - genau wie jedes andere an das Kommunikationsnetzwerk 10 angeschlossene Gerät 12 - eine Schnittstelle 52. Über diese Schnittstelle 52 können im Betrieb des übergeordneten Geräts 16 neben anderen Datentelegrammen speziell Identifikationsanfragen 22 versendet und Identifikationskennungen 24 empfangen werden. Des Weiteren weist das übergeordnete Gerät 16 eine Verarbeitungseinheit 54 in Form von oder nach Art eines Mikroprozessors sowie einen Speicher 56 auf. In den Speicher 56 ist ein Computerprogramm 58 geladen, das eine Implementation des hier beschriebenen Verfahrens mit eventuell einzelnen oder mehreren besonderen Ausführungsformen darstellt, insbesondere eine Implementation des Flussdiagramms 34 aus FIG 4. Im Speicher 56 wird auch die Liste 30 mit identifizierten Geräten 12 vorgehalten. Im Betrieb des übergeordneten Geräts 16 führt dessen Verarbeitungseinheit 54 das Computerprogramm 58 aus und bewirkt so eine Ausführung des hier beschriebenen Verfahrens. Die Verarbeitungseinheit 54, der Speicher 56 und das Computerprogramm 58 sind demnach Mittel zur Ausführung des Verfahrens.

## Patentansprüche

1. Verfahren zur Identifikation von in einem Kommunikationsnetzwerk (10) zusammengefassten Geräten (12) durch ein übergeordnetes Gerät (16), wobei jedem Gerät (12) in einem vorgegebenen Adressraum (18) eine eindeutige Adresse zugewiesen ist, mit folgenden Schritten:
das übergeordnete Gerät (16) unterteilt den Adressraum (18) in Anfragebereiche (20), wobei das Verfahren mit genau einem ersten Anfragebereich (20) beginnt und sich im weiteren Verlauf neue Anfragebereiche (28, 26) ergeben können, die an die Stelle vorhergehender Anfragebereiche (20) treten, wobei die Anfragebereiche zusammenhängende Ausschnitte aus dem Adressraum (18) umfassen,
das übergeordnete Gerät (16) sendet an alle Adressen im ersten Anfragebereich (20) eine Identifikationsanfrage (22),
Geräte (12), welche die Identifikationsanfrage (22) erhalten, antworten mit einer Identifikationskennung (24) die zumindest die Adresse des jeweiligen Gerätes umfasst,
das übergeordnete Gerät (16) sammelt die erhaltenen Identifikationskennungen (24) **dadurch gekennzeichnet, dass** das übergeordnete Gerät die erhaltenen Identifikationskennungen in einer nach den Adressen der Geräte (12)sortierten Liste (30) sammelt und eine Anzahl der erhaltenen Identifikationskennungen (24) mit einem vorgegebenen Schwellwert vergleicht,
wenn die Anzahl der erhaltenen Identifikationskennungen (24) unterhalb des Schwellwerts liegt, wird das Verfahren mit einem an den Anfragebereich (20) angrenzenden neuen Anfragebereich (26) fortgesetzt,
wenn die Anzahl der erhaltenen Identifikationskennungen (24) oberhalb des Schwellwerts liegt, wird das Verfahren mit einem reduzierten Anfragebereich (28), der eine Teilmenge des Anfragebereichs (20) ist, fortgesetzt,
wobei bei einer Fortsetzung des Verfahrens mit einem reduzierten Anfragebereich (28) eine Obergrenze des neuen Anfragebereichs (28) durch die Adresse eines bereits identifizierten Geräts (12) festgelegt wird, d.h. durch eine Adresse, die sich in der obigen Liste (30) befindet, und wobei die Untergrenze des reduzierten Anfragebereichs (28) identisch ist mit der Untergrenze des vorangegangenen Anfragebereichs (20), wobei die Obergrenze des neuen Anfragebereichs (28) durch eine in der Liste (30) an einer Zugriffsposition (32) gespeicherte Adresse eines identifizierten Geräts (12) festgelegt ist und
wobei die Zugriffsposition (32) bestimmt wird durch die Summe des Listenindex der als Untergrenze festgelegten Adresse und der Anzahl der in der ersten den Schwellwert überschreitenden Anfrage identifizierten Geräte (12).

2. Verfahren nach Anspruch 1, wobei das Verfahren mit einem den vollständigen Adressraum umfassenden Anfragebereich (20) beginnt.

3. Verfahren nach einem der vorangehenden Ansprüche, wobei wenn die Anzahl der erhaltenen Identifikationskennungen (24) unterhalb des Schwellwerts liegt die Zugriffsposition (32) um die Anzahl der erhaltenen Identifikationskennungen (24) erhöht wird und die Zugriffsposition (24) unverändert bleibt, wenn die Anzahl der erhaltenen Identifikationskennungen (24) oberhalb des Schwellwerts liegt.

4. Verfahren nach einem der vorangehenden Ansprüche, wobei der Schwellwert als Konstante oder als Variable realisiert ist.

5. Verfahren nach einem der vorangehenden Ansprüche, wobei der Schwellwert basierend auf der Bandbreite des Kommunikationsnetzwerks und/oder umfasster Subnetze initialisiert wird.

6. Verfahren nach einem der vorangehenden Ansprüche, wobei der Schwellwert basierend auf der Leistungsfähigkeit von Routern (14) des Kommunikationsnetzwerks (10) initialisiert wird.

7. Computerprogramm mit Programmcode-Mitteln, um alle Schritte von jedem beliebigen der Ansprüche 1 bis 6 durchzuführen, wenn das Computerprogramm auf einem in einem Kommunikationsnetzwerk (10) als übergeordnetes Gerät (16) fungierenden Gerät (12) ausgeführt wird.

8. Elektrisches Gerät (12), das in einem weitere Geräte (12) umfassenden Kommunikationsnetzwerk (10) zumindest zeitweise als übergeordnetes Gerät (16) fungiert, mit einer Verarbeitungseinheit (54) und einem Speicher (56), in den ein Computerprogramm (58) nach Anspruch 7 geladen ist, das im Betrieb des Gerätes (12, 16) durch die Verarbeitungseinheit (54) ausgeführt wird.

## Claims

1. Method for the identification, by a higher-level device (16), of devices (12) combined in a communication network (10), wherein each device (12) is assigned a unique address in a predefined address space (18), comprising the following steps:
the higher-level device (16) subdivides the address space (18) into request regions (20), wherein the method begins with a single request region (20) and, as it proceeds, new request regions (28, 26) can arise which come to replace previous request regions (20),
wherein the request regions comprise coherent parts of the address space (18)
the higher-level device (16) sends an identification request (22) to all the addresses in the first request region (20),
devices (12) which receive the identification request (22) answer with an identification code (24) which comprises at least the address of the respective device,
the higher-level device (16) collects the identification codes (24) received, **characterised in that** the higher-level device collects the identification codes received in a list (30) sorted by the addresses of the devices (12) and compares a number of identification codes (24) received with a predefined threshold value,
if the number of identification codes (24) received is below the threshold value, the method is continued with a new request region (20) bordering the request region (20),
if the number of identification codes (24) received is above the threshold value, the method is continued with a reduced request region (28) which is a subset of the request region (20),
wherein when the method is continued with a reduced request region (28) an upper limit of the new request region (28) is defined by the address of an already identified device (12), i.e. by an address which is located in the top list (30), and wherein the lower limit of the reduced request region (28) is identical to the lower limit of the preceding request region (20), wherein the upper limit of the new request region (28) is defined by an address of an identified device (12) stored in the list (20) at an access position (32) and
wherein the access position (32) is determined by the sum of the list index of the address defined as the lower limit and the number of devices (12) identified in the first request exceeding the threshold value.

2. Method according to claim 1, wherein the method begins with a request region (20) encompassing the complete address space.

3. Method according to one of the preceding claims, wherein, if the number of received identification codes (24) is below the threshold value, the access position (32) is increased by the number of identification codes (24) received and the access position (24) remains unchanged if the number of identification codes (24) received is above the threshold value.

4. Method according to one of the preceding claims, wherein the threshold value is realized as a constant or as a variable.

5. Method according to one of the preceding claims, wherein the threshold value is initialised on the basis of the bandwidth of the communication network and/or comprised subnetworks.

6. Method according to one of the preceding claims, wherein the threshold value is initialised on the basis of the performance capability of routers (14) in the communication network (10).

7. Computer program having program code means for implementing all the steps of any of the claims 1 to 6 when the computer program is executed on a device (12) acting as a higher-level device (16) in a communication network (10).

8. Electrical device (12) which acts at least sometimes as a higher-level device (16) in a communication network (10) comprising further devices (12), having a processing unit (54) and a memory (56) into which a computer program (58) according to claim 7 has been loaded which is executed by the processing unit (54) during operation of the device (12, 16).

## Revendications

1. Procédé d'identification d'appareils (12) regroupés dans un réseau de communication (10) par un appareil principal (16), à chaque appareil (12) étant affectée une adresse univoque dans un espace d'adresses donné (18), comportant les étapes suivantes :
l'appareil principal (16) subdivise l'espace d'adresses (18) en zones de requêtes (20), le procédé commençant par exactement une première zone de requêtes (20) et de nouvelles zones de requêtes (28,26) pouvant se présenter par la suite, lesquelles viennent remplacer des zones de requêtes précédentes (20), les zones de requêtes comprenant des extraits connexes de l'espace d'adresses (18),
l'appareil principal (16) envoie à toutes les adresses de la première zone de requêtes (20) une requête d'identification (22),
des appareils (12) qui reçoivent la requête d'identification (22) répondent par un identifiant d'identification (24) qui comprend au moins l'adresse de l'appareil respectif,
l'appareil principal (16) recueille les identifiants d'identification reçus (24),
**caractérisé en ce que** l'appareil principal recueille les identifiants d'identification reçus dans une liste (30) ordonnée selon les adresses des appareils (12) et compare un nombre d'identifiants d'identification reçus (24) avec une valeur seuil donnée,
le procédé se poursuit avec une nouvelle zone de requêtes (26) adjacente à la zone de requêtes (20) lorsque le nombre d'identifiants d'identification reçus (24) est inférieur à la valeur seuil,
le procédé se poursuit avec une zone de requêtes réduite (28) qui est un sous-ensemble de la zone de requêtes (20) lorsque le nombre d'identifiants d'identification reçus (24) est supérieur à la valeur seuil,
une limite supérieure de la nouvelle zone de requêtes (28) étant, en cas de poursuite du procédé avec une zone de requêtes réduite (28), fixée par l'adresse d'un appareil (12) déjà identifié, c'est-à-dire par une adresse qui se trouve dans la liste ci-dessus (30), et la limite inférieure de la zone de requêtes réduite (28) étant identique à la limite inférieure de la zone de requêtes précédente (20), la limite supérieure de la nouvelle zone de requêtes (28) étant fixée par une adresse d'un appareil identifié (12) sauvegardée dans la liste (30) à une position d'accès (32) et la position d'accès (32) étant déterminée par la somme de l'index de liste de l'adresse fixée comme limite inférieure et le nombre des appareils (12) identifiés dans la première requête dépassant la valeur seuil.

2. Procédé selon de revendication 1, le procédé commençant par une zone de requêtes (20) comprenant l'espace d'adresses complet.

3. Procédé selon l'une des revendications précédentes, la position d'accès (32) étant augmentée du nombre d'identifiants d'identification reçus (24) lorsque le nombre d'identifiants d'identification reçus (24) est inférieur à la valeur seuil et la position d'accès (24) restant inchangée lorsque le nombre d'identifiants d'identification reçus (24) est supérieur à la valeur seuil.

4. Procédé selon l'une des revendications précédentes, la valeur seuil étant réalisée en tant que constante ou en tant que variable.

5. Procédé selon l'une des revendications précédentes, la valeur seuil étant initialisée sur la base de la largeur de bande du réseau de communication et/ou de sous-réseaux inclus.

6. Procédé selon l'une des revendications précédentes, la valeur seuil étant initialisée sur la base de la capacité de routeurs (14) du réseau de communication (10).

7. Programme informatique avec des moyens de code de programme pour exécuter toutes les étapes de n'importe quelle des revendications 1 à 6 lorsque le programme informatique est exécuté sur un appareil (12) fonctionnant en tant qu'appareil principal (16) dans un réseau de communication (10) .

8. Appareil électrique (12) qui fonctionne au moins temporairement en tant qu'appareil principal (16) dans un réseau de communication (10) comprenant d'autres appareils (12), comportant une unité de traitement (54) et une mémoire (56) dans laquelle est chargé un programme informatique (58) selon la revendication 7, lequel est exécuté par l'unité de traitement (54) lorsque l'appareil (12, 16) fonctionne.
